# EUROPEAN PATENT APPLICATION

(11) **EP 4 564 075 A1**
(43) Date of publication of application: **04.06.2025**
(21) Application number: 23846732.8
(22) Date of filing: 06.04.2023
(51) Int. Cl.: G02B 7/09, G02B 27/64, H02K 33/18, G03B 13/18, G03B 13/36, G03B 17/12, H04N 23/55

(54) **LENS DRIVING DEVICE, CAMERA DEVICE, AND OPTICAL INSTRUMENT**

(30) Priority: 26.07.2022 KR 20220092830
(71) Applicant: LG INNOTEK CO. LTD, Gangseo-gu Seoul 07796 (KR)
(72) Inventor: LEE, Sung Guk, Seoul 07796 (KR)
(74) Representative: DREISS Patentanwälte PartG mbB
(86) International application number: PCT/KR2023/004648
(87) International publication number: WO 2024/025071

(57) **Abstract**

The embodiment relates to a lens driving device comprising: a base; a first holder disposed in the base; a second holder disposed in the first holder; a bobbin disposed in the second holder; a first driving unit for moving the first holder in a z-axis direction along an optical axis; a second driving unit for moving the second holder in a y-axis direction perpendicular to the z-axis direction; and a third driving unit for moving the bobbin in an x-axis direction perpendicular to both the z-axis direction and the y-axis direction. Each of the first to third driving units includes a coil and a magnet.

## Description

### TECHNICAL FIELD

This embodiment relates to a lens driving device, a camera device, and an optical instrument.

### BACKGROUND ART

A camera device is a device that takes pictures or videos of a subject and is mounted in optical instruments such as smartphones, drones, and vehicles.

The camera device has an auto focus function that automatically adjusts a focus depending on a distance to the subject. In addition, an optical image stabilization function is applied to prevent the focus from being shaken due to a user's hand shake.

However, in order to place constitutions such as the magnet and the coil that perform the auto focus function and the optical image stabilization function, a camera having a size larger than a thickness of the smartphone in an optical axis direction is required to cause a problem in which the camera mounted on the smartphone protrudes more than other portions of the smartphone.
(Patent Document 1) KR 10-2015-0118005 A

### DISCLOSURE OF THE INVENTION

### TECHNICAL PROBLEM

This embodiment is to provide a camera device having a minimized size in an optical axis direction even through an auto focus function and an optical image stabilization function are provided.

### TECHNICAL SOLUTION

A lens driving device according to this embodiment may comprise: a base; a first holder disposed in the base; a second holder disposed in the first holder; a bobbin disposed in the second holder; a first driving unit configured to move the first holder in a z-axis direction along an optical axis; a second driving unit configured to move the second holder in a y-axis direction perpendicular to the z-axis direction; and a third driving unit configured to move the bobbin in an x-axis direction perpendicular to the z-axis direction and the y-axis direction, wherein each of the first to third driving units may comprise a coil and a magnet, the first driving unit may comprise a coil coupled to one of the base and the first holder and a magnet coupled to the other of the base and the first holder, the second driving unit may comprise a coil coupled to one of the base and the second holder and a magnet coupled to the other of the base and the second holder, and the third driving unit may comprise a coil coupled to one of the base and the bobbin and a magnet coupled to the other of the base and the bobbin.

The first holder and the second holder may be separated from each other.

A first sidewall of the first holder and a first sidewall of the second holder may overlap each other in the x-axis direction and may be disposed at one side of the bobbin.

The lens driving device may further comprise a first ball disposed between a second sidewall of the first holder and a second sidewall of the base.

The lens driving device may further comprise a second ball disposed between a first sidewall of the first holder and a first sidewall of the second holder.

The lens driving device may further comprise a third ball disposed between a second sidewall of the second holder and the bobbin.

A lens driving device according to this embodiment may comprise: a fixed unit; a first movable unit moving in a z-axis direction along an optical axis relative to the fixed unit; a second movable unit moving in a y-axis direction perpendicular to the z-axis direction; and a third movable unit moving in an x-axis direction perpendicular to the y-axis direction, wherein a first ball may be disposed between a second sidewall of the first movable unit and a second sidewall of the fixed unit, a second ball may be disposed between a first sidewall of the first movable unit and a first sidewall of the second movable unit, and a third ball may be disposed between a second sidewall of the second movable unit and the third movable unit.

A lens driving device according to this embodiment may comprise: a base; a first holder moving in a z-axis direction along an optical axis relative to the base; a second holder moving in a y-axis direction perpendicular to the z-axis direction; and a bobbin moving in an x-axis direction perpendicular to the y-axis direction, wherein a first ball may be disposed between a second sidewall of the first holder and a second sidewall of the base; a second ball may be disposed between a first sidewall of the first holder and a first sidewall of the second holder, a third ball may be disposed between a second sidewall of the second holder and the bobbin, and the first holder and the second holder may be spaced apart from each other.

A lens driving device according to this embodiment may comprise: a base; a first holder disposed in the base; a second holder disposed in the first holder; a third holder disposed in the second holder; a first driving unit configured to move the first holder in a direction along an optical axis; a second driving unit configured to move the second holder in a first direction perpendicular to the optical axis; a third driving unit configured to move the third holder in a second direction perpendicular to both the optical axis and the first direction; a first ball disposed between the base and the first holder; a second ball disposed between the first holder and the second holder; and a third ball disposed between the second holder and the third holder, wherein the third ball may be disposed between the second holder and the third holder in the first direction.

The second ball may be disposed between the first holder and the second holder in the second direction.

The first driving unit may comprise: a first magnet disposed on the first holder and a first coil that interacts with the first magnet; the second driving unit may comprise a second magnet disposed on the second holder and a second coil that interacts with the second magnet; and the third driving unit may comprise a third magnet disposed on the third holder and a third coil that interacts with the third magnet.

The lens driving device may comprise a substrate disposed on the base, wherein the substrate may comprise a first portion and a third portion, which are disposed to be opposite to each other, and a second portion configured to connect the first portion to the third portion, wherein the first coil may be disposed at the first portion of the substrate. The second coil may be disposed at the second portion of the substrate, and the third coil may be disposed at the third portion of the substrate.

The lens driving device may comprise: a first yoke disposed at a position corresponding to the first magnet at the first portion of the substrate; a second yoke disposed at a position corresponding to the second magnet at the second portion of the substrate; and a third yoke disposed at a position corresponding to the third magnet at the third portion of the substrate.

The third ball may be disposed between an inner surface of the second holder and an outer surface of the third holder.

An entire area from a lower end to an upper end of the third ball may overlap the second holder and the third holder in the first direction.

When viewed from the outside of the third holder, the third ball may overlap the third magnet in a horizontal direction.

The first holder may comprise a hole, and the second magnet may be disposed in the hole of the first holder to overlap the first holder in the first direction.

The second holder may comprise a hole, and the third magnet may be disposed in the hole of the second holder to overlap the second holder in the second direction.

The base may comprise a first sidewall and a second sidewall, which are disposed to be opposite to each other, and a third sidewall and a fourth sidewall, which are disposed to be opposite to each other, the second coil may be disposed at a position corresponding to the third sidewall, and a distance between the optical axis and the fourth sidewall of the base may be less than a distance between the optical axis and the third sidewall of the base.

The second holder may comprise a portion disposed between the first holder and the third holder in the second direction.

The first holder may not overlap the second holder and the third holder in a direction along the optical axis.

A camera device according to this embodiment may comprise: a printed circuit board; an image sensor disposed on the printed circuit board; the lens driving device disposed on the printed circuit board; and a lens coupled to the lens driving device.

An optical instrument according to this embodiment may comprise: a main body; the camera device disposed on the main body according to claim 14; and a display disposed in the main body to output one or more of videos and images captured by the camera device.

### ADVANTAGEOUS EFFECTS

According to this embodiment, the auto focus function and the optical image stabilization function may be performed in the camera device having the minimized size in the optical axis direction.

That is, according to this embodiment, both the auto focus function and the optical image stabilization function may be performed even in the camera device that does not protrude from the smartphone.

Furthermore, according to this embodiment, the camera device having the minimized size in the horizontal and vertical directions perpendicular to the optical axis may be provided.

### BRIEF DESCRIPTION OF THE DRAWINGS

FIG 1 is a perspective view of a lens driving device according to this embodiment.
FIG 2 is a cross-sectional view taken along line A-A of FIG 1.
FIG 3 is a cross-sectional view taken along line B-B of FIG 1.
FIG 4 is a cross-sectional view taken in a direction perpendicular to an optical axis of the lens driving device according to this embodiment.
FIG 5 is a cross-sectional perspective view illustrating an arranged structure of a first ball in the lens driving device according to this embodiment.
FIG 6 is a cross-sectional perspective view illustrating an arranged structure of a second ball in the lens driving device according to this embodiment.
FIG 7 is a cross-sectional perspective view illustrating an arranged structure of a third ball in the lens driving device according to this embodiment.
FIG 8 is an exploded perspective view of the lens driving device according to this embodiment.
FIG 9 is an exploded perspective view of the lens driving device when viewed in a direction different from that in FIG 8.
FIG 10 is a perspective view illustrating a state in which a cover is omitted in the lens driving device according to this embodiment.
FIG 11 is a perspective view illustrating a fixed unit of the lens driving device according to this embodiment.
FIG 12 is a perspective view when the lens driving device that is in the state of FIG 11 is viewed in a direction different from that in FIG 11.
FIG 13 is a perspective view illustrating a movable unit of the lens driving device according to this embodiment.
FIG 14 is a perspective view illustrating a first holder of the lens driving device according to this embodiment.
FIG 15 is a perspective view illustrating a second movable unit and a third movable unit of the lens driving device according to this embodiment.
FIG 16 is a perspective view illustrating a second holder of the lens driving device according to this embodiment.
FIG 17 is a perspective view illustrating a third movable unit of the lens driving device according to this embodiment.

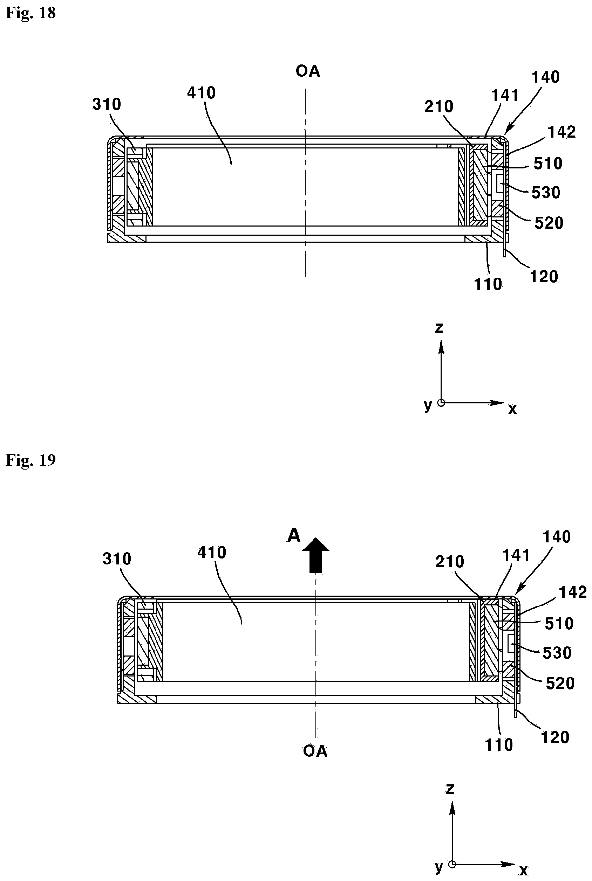

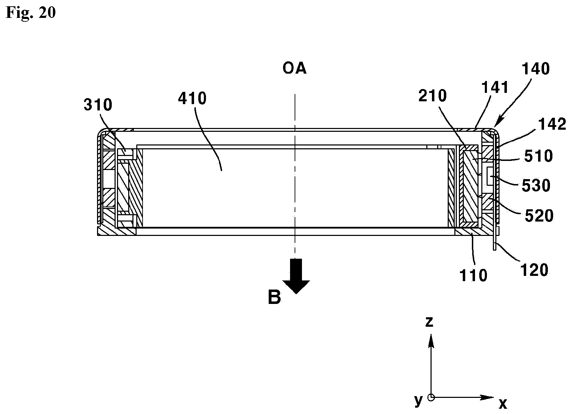

FIGS. 18 to 20 are views for explaining auto focus driving of the lens driving device according to this embodiment. FIG 18 is a cross-sectional view illustrating a configuration of the movable unit in an initial state in which current is not applied to a first coil. FIG 19 is a cross-sectional view illustrating a state in which forward current is applied to a first coil so that the movable unit moves upward in the optical axis direction. FIG 20 is a cross-sectional view illustrating a state in which reverse current is applied to the first coil so that the movable unit moves downward in the optical axis direction.

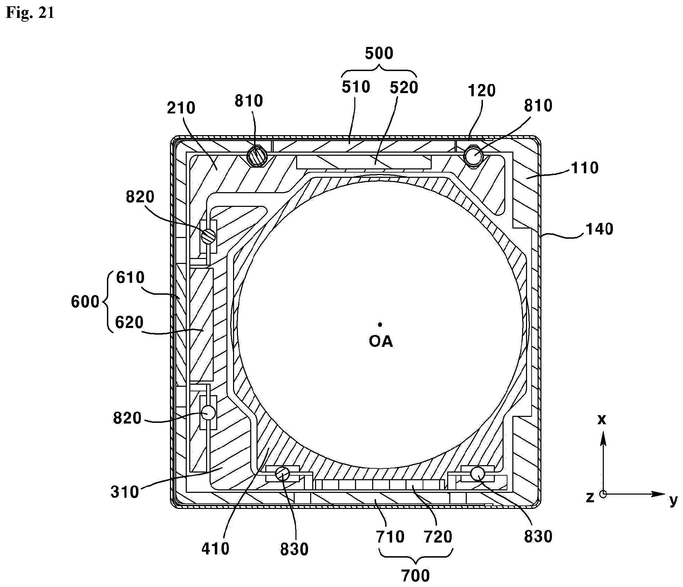

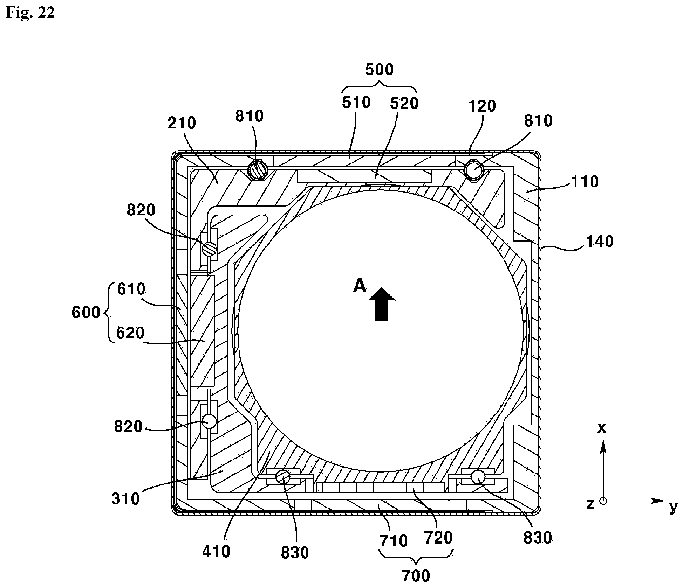

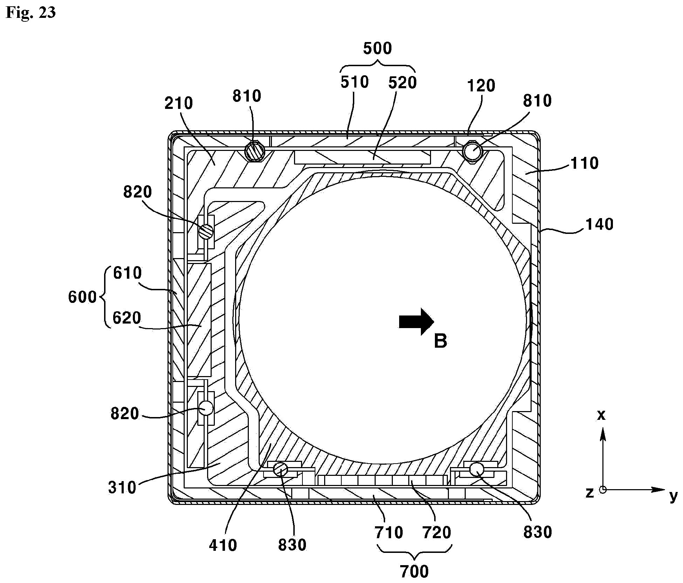

FIGS. 21 to 23 are views for explaining optical image stabilization driving of the lens driving device according to this embodiment. FIG 21 is a cross-sectional view illustrating a configuration of the movable unit in the initial state in which current is not applied to a second coil and a third coil. FIG 22 is a cross-sectional view illustrating a state in which current is applied to the second coil so that the second movable unit and the third movable unit move in an x-axis direction perpendicular to the optical axis. FIG 23 is a cross-sectional view illustrating a state in which current is applied to the third coil so that the third movable unit moves in a y-axis direction perpendicular to both the optical axis and an x-axis.
FIG 24 is an exploded perspective view of the camera device according to this embodiment.
FIG 25 is a perspective view of an optical instrument according to this embodiment.
FIG 26 is a perspective view illustrating a modified example of an optical instrument.

### MODE FOR CARRYING OUT THE INVENTION

Hereinafter, preferred embodiments of the present invention will be described in detail with reference to the accompanying drawings.

However, the technical idea of the present invention is not limited to some of the embodiments described, but may be implemented in various different forms, and one or more of the components in embodiments may be selectively combined or substituted for use even within the scope of the technical idea of the present invention.

In addition, terms (comprising technical and scientific terms) used in the embodiments of the present invention may be interpreted as having a meaning that may be generally understood by a person of ordinary skill in the technical field to which the present invention belongs, unless explicitly and specifically defined and described, and the terms that are commonly used, such as terms defined in a dictionary, may be interpreted in consideration of the contextual meaning of the relevant technology.

In addition, the terms used in the embodiments of the present invention are for the purpose of describing the embodiments and are not intended to limit the present invention.

In this specification, the singular may also comprise the plural unless specifically stated otherwise in the phrase, and when it is described as "A and (or at least one) of B, C", it may comprise one or more of all combinations that may be combined with A, B, C.

In addition, in describing components of the embodiments of the present invention, the terms such as first, second, A, B, (a), (b), etc. may be used. These terms are only intended to distinguish one component from another and are not intended to limit the nature, order, or sequence of the component.

In addition, when a component is described as being 'connected', 'coupled', or 'linked' to another component, it may comprise not only cases where the component is 'connected', 'coupled', or 'linked' directly to the other component, but also cases in which the component is 'connected', 'coupled', or 'linked' by another component between the component and the other component.

In addition, when described as being formed or arranged "above (upper)" or "below (lower)" each component, "above (upper)" or "below (lower)" comprises not only the case where the two components are in direct contact with each other, but also the case in which one or more other components are formed or arranged between the two components. In addition, when expressed as "above (upper)" or "below (lower)", it may comprise the meaning of not only the upward direction but also the downward direction based on one component.

The 'optical axis (see reference symbol OA of FIG 18, etc.) direction' used below is defined as the optical axis direction of a lens and/or image sensor coupled to a lens driving device.

The 'vertical direction' used below may be a direction parallel to or the same direction as the optical axis. The vertical direction may correspond to a 'z-axis direction'. The "horizontal direction' used below may refer to a direction perpendicular to the vertical direction. That is, the horizontal direction may be a direction perpendicular to the optical axis. Thus, the horizontal direction may comprise an 'x-axis direction' and a 'y-axis direction'.

The 'auto focus (AF) function' used below may be defined as a function that automatically focuses on a subject by adjusting a distance from an image sensor by moving a lens along the optical axis according to a distance to the subject so that a clear image of the subject is obtained on the image sensor. In addition, a 'closed-loop auto focus (CLAF) control' is defined as controlling a position of the lens by detecting a distance between the image sensor and the lens to provide feedback in real time, thereby improving accuracy of focus adjustment.

The 'optical image stabilization (OIS) function' used below is defined as a function that moves or tilts the lens in the direction perpendicular to the optical axis to offset hand shake in order to prevent images or videos from being shaken due to the user's hand shake. In addition, a 'CLAF (closed-loop auto focus) control' is defined as detecting a position of the lens with respect to the image sensor and controlling the feedback of the lens position in real time to improve accuracy of image stabilization.

Hereinafter, a configuration of the lens driving device according to this embodiment is described with reference to the drawings.

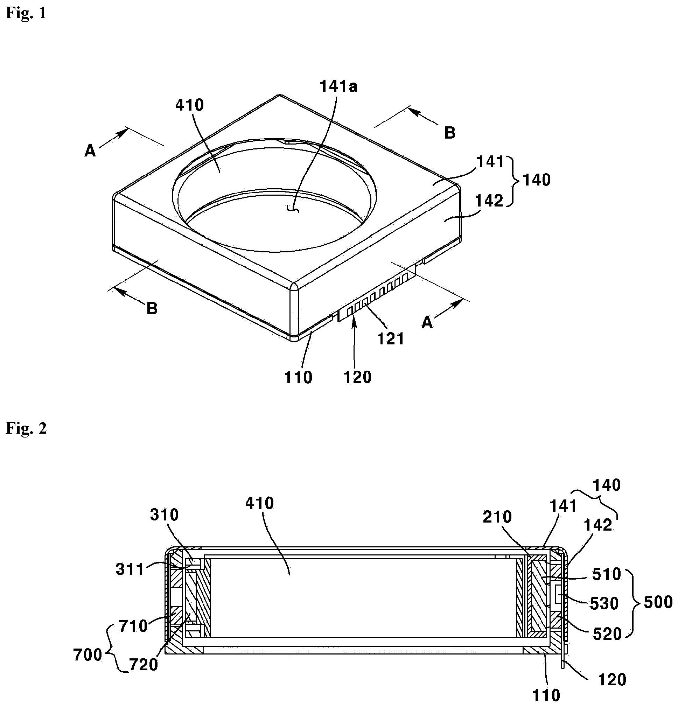

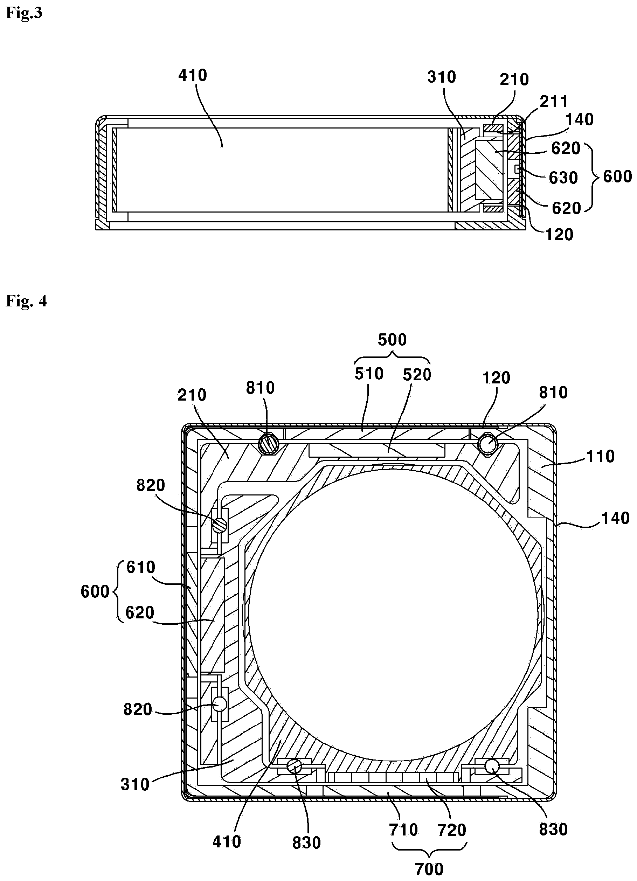

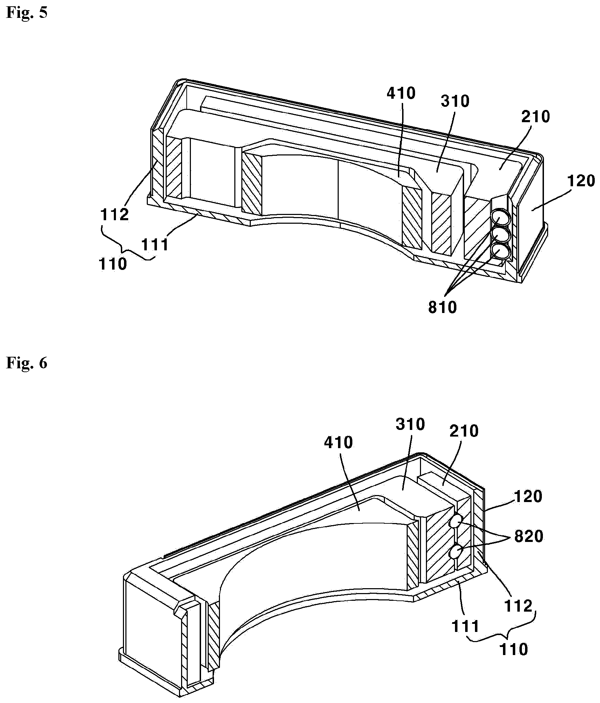

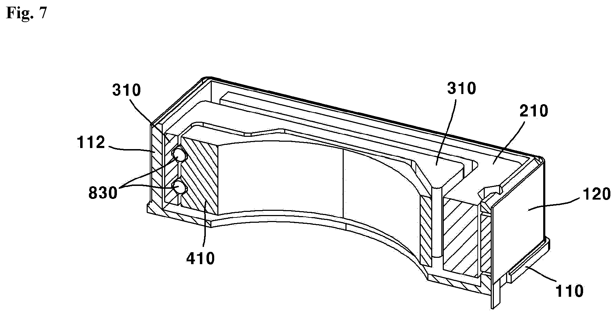

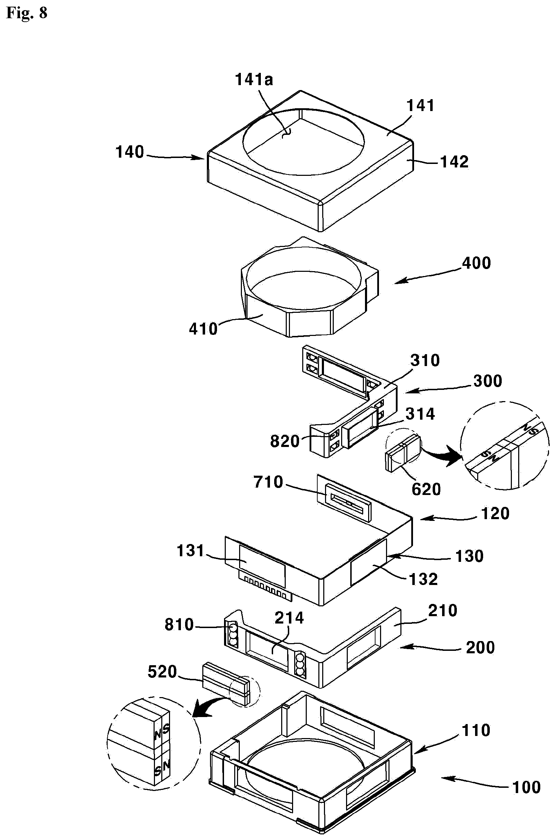

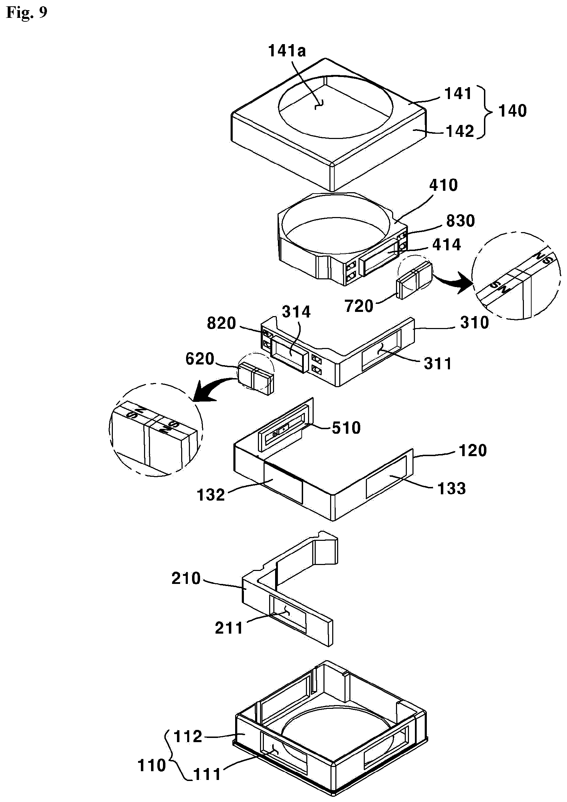

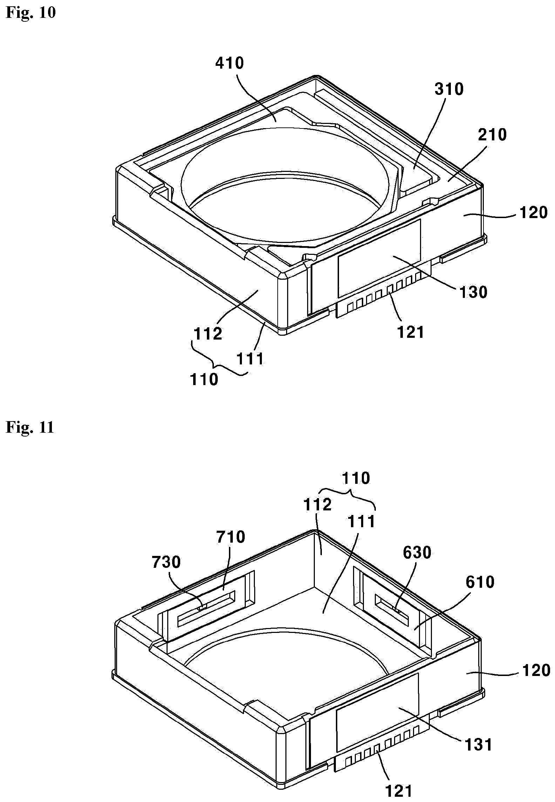

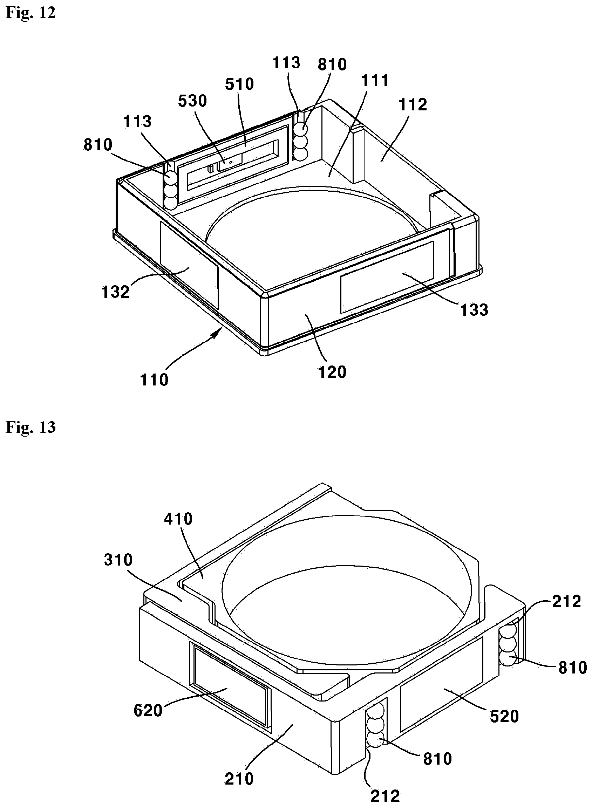

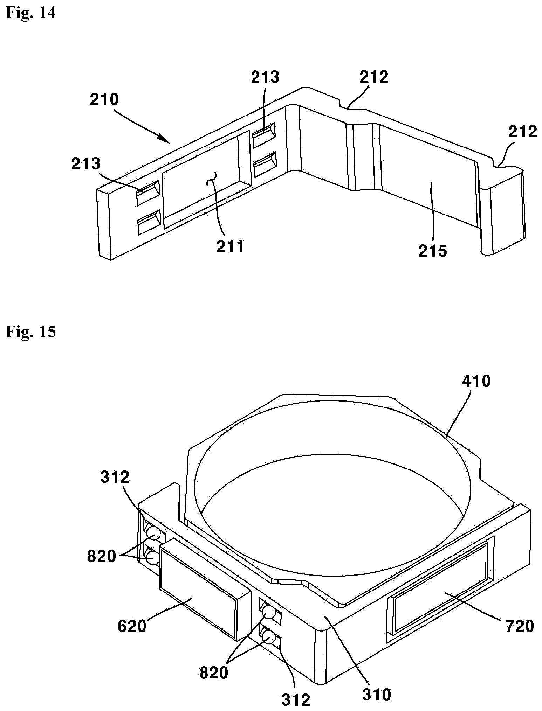

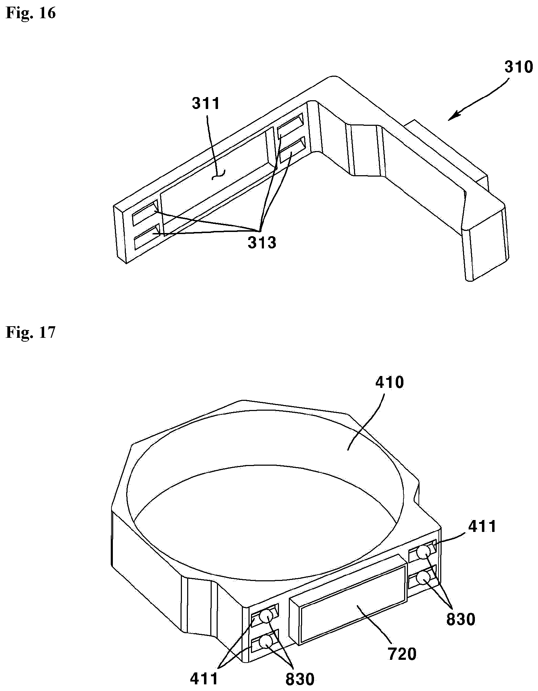

FIG 1 is a perspective view of a lens driving device according to this embodiment, FIG 2 is a cross-sectional view taken along line A-A of FIG 1, FIG 3 is a cross-sectional view taken along line B-B of FIG 1, FIG 4 is a cross-sectional view taken in a direction perpendicular to an optical axis of the lens driving device according to this embodiment, FIG 5 is a cross-sectional perspective view illustrating an arranged structure of a first ball in the lens driving device according to this embodiment, FIG 6 is a cross-sectional perspective view illustrating an arranged structure of a second ball in the lens driving device according to this embodiment, FIG 7 is a cross-sectional perspective view illustrating an arranged structure of a third ball in the lens driving device according to this embodiment, FIG 8 is an exploded perspective view of the lens driving device according to this embodiment, FIG 9 is an exploded perspective view of the lens driving device when viewed in a direction different from that in FIG 8, FIG 10 is a perspective view illustrating a state in which a cover is omitted in the lens driving device according to this embodiment, FIG 11 is a perspective view illustrating a fixed unit of the lens driving device according to this embodiment, FIG 12 is a perspective view when the lens driving device that is in the state of FIG 11 is viewed in a direction different from that in FIG 11, FIG 13 is a perspective view illustrating a movable unit of the lens driving device according to this embodiment, FIG 14 is a perspective view illustrating a first holder of the lens driving device according to this embodiment, FIG 15 is a perspective view illustrating a second movable unit and a third movable unit of the lens driving device according to this embodiment, FIG 16 is a perspective view illustrating a second holder of the lens driving device according to this embodiment, and FIG 17 is a perspective view illustrating a third movable unit of the lens driving device according to this embodiment.

A lens driving device 10 may be a voice coil motor (VCM). The lens driving device 10 may be a lens driving motor. The lens driving device 10 may be a lens driving actuator. The lens driving device 10 may comprise an AF module. The lens driving device 10 may comprise an OIS module.

The lens driving device 10 may comprise a fixed unit 100. The fixed unit 100 may be a portion that is relatively fixed when the movable unit moves. The movable unit may move relative to the fixed unit 100.

The lens driving device 10 may comprise a base 110. The fixed unit 100 may comprise the base 110. The base 110 may be disposed below a first holder 210. The base 110 may be disposed under a second holder 310. The base 110 may be disposed under a third holder 410. The base 110 may be coupled to a cover 140. The first holder 210, the second holder 310, and the third holder 410 may be disposed on the base 110. The first holder 210, the second holder 310, and the third holder 410 may be disposed on a lower plate 111 of the base 110.

The base 110 may comprise the lower plate 111. The base 110 may comprise a side plate 112. The side plate 112 of the base 110 may be a 'side portion'. The side plate 112 of the base 110 may extend from a top surface of the lower plate 111. The side plate 112 of the base 110 may comprise a plurality of side plates. The side plate 112 of the base 110 may comprise four side plates. The base 110 may comprise a first side portion and a second side portion, which are disposed opposite to each other, and a third side portion and a fourth side portion, which are disposed opposite to each other. Here, the second coil 610 may be disposed at a position corresponding to the third side portion of the base 110. A distance between an optical axis and the fourth side portion of the base 110 may be closer than a distance between the optical axis and the third side portion of the base 110. That is, the optical axis may be disposed to be biased from a central axis of the base 110 to the fourth side portion of the base 110.

The base 110 may comprise a groove 113. The groove 113 may be a 'first ball accommodation groove'. The first ball 810 may be disposed in the groove 113. The groove 113 may be in direct contact with the first ball 810. The groove 113 may be disposed in an optical axis direction. The groove 113 may comprise a plurality of grooves. The groove 113 may comprise two grooves. The two grooves may be disposed parallel to each other. The groove 113 may comprise a first groove that is in contact with the first ball 810 at two points, and a second groove that is in contact with the first ball 810 at one point. As a modified example, both the first groove and the second groove may be in contact with the first ball 810 at two points.

The lens driving device 10 may comprise a substrate 120. The fixed unit 100 may comprise a substrate 120. The substrate 120 may be disposed on the base 110. The substrate 120 may be disposed on the side plate 112 of the base 110. The substrate 120 may be disposed on an outer surface of the side plate 112 of the base 112. The substrate 120 may be a circuit board. The substrate 120 may be a printed circuit board. The substrate 120 may comprise a flexible printed circuit board (FPCB). The substrate 120 may be disposed parallel to the optical axis. The substrate 120 may be folded. The substrate 120 may be folded several times. The substrate 120 may be folded twice.

The substrate 120 may comprise a first portion and a third portion, which are disposed opposite each other, and a second portion connecting the first portion to the third portion. Here, the first coil 510 may be disposed on the first portion of the substrate 120. The second coil 610 may be disposed on the second portion of the substrate 120. The third coil 710 may be disposed on the third portion of the substrate 120.

The substrate 120 may comprise a body part. The coils 510, 610, and 710 may be disposed in the body part. The substrate 120 may comprise a terminal part 121. The terminal part 121 may extend downward from the body part. The terminal part 121 may be disposed at a lower portion of the substrate 120. The terminal part 121 may protrude downward from the base 110. The terminal part 121 may comprise a terminal. The terminal part 121 may comprise a plurality of terminals. The plurality of terminals of the substrate 120 may be electrically connected to a driver IC 530. The plurality of terminals of the substrate 120 may be electrically connected to a sensor 630 and a sensor 730. The plurality of terminals of the substrate 120 may be electrically connected to the second coil 610 and the third coil 710. The terminal part 121 may be coupled to a printed circuit board 50.

The lens driving device 10 may comprise a yoke 130. The fixed unit 100 may comprise the yoke 130. The yoke 130 may be an 'attractive member'. The yoke 130 may be made of a metal. Attractive force may be generated between the yoke 130 and each of magnets 520, 620, and 720. The balls 810, 820, and 830 may be pressed by the attractive force between the yoke 130 and the magnets 520, 620, and 720. The yoke 130 may be disposed on the substrate 120. The yoke 130 may be disposed on an outer surface of the substrate 120.

The yoke 130 may comprise a plurality of yokes. The yoke 130 may comprise three yokes. The yoke 130 may comprise first to third yokes 131, 132, and 133. The first to third yokes 131, 132, and 133 may be spaced apart from each other.

The yoke 130 may comprise the first yoke 131. The first yoke 131 may be an 'AF yoke'. The first yoke 131 may be disposed at the first portion of the substrate 120. The first yoke 131 may be disposed on an outer surface of the first portion of the substrate 120. The first yoke 131 may be disposed at a position corresponding to the first magnet 520. Attractive force may be generated between the first yoke 131 and the first magnet 520. The first ball 810 may be pressed by the attractive force between the first yoke 131 and the first magnet 520. The first ball 810 may be pressed between the first holder 210 and the base 110 by the attractive force between the first yoke 131 and the first magnet 520.

The yoke 130 may comprise the second yoke 132. The second yoke 132 may be an 'OIS-x yoke'. The second yoke 132 may be disposed at the second portion of the substrate 120. The second yoke 132 may be disposed on an outer surface of the second portion of the substrate 120. The second yoke 132 may be disposed at a position corresponding to the second magnet 620. Attractive force may be generated between the second yoke 132 and the second magnet 620. The second ball 820 may be pressed by the attractive force between the second yoke 132 and the second magnet 620. The second ball 820 may be pressed between the second holder 310 and the first holder 210 by the attractive force between the second yoke 132 and the second magnet 620.

The yoke 130 may comprise the third yoke 133. The third yoke 133 may be an 'OIS-y yoke'. The third yoke 133 may be disposed at the second portion of the substrate 120. The third yoke 133 may be disposed on the outer surface of the second portion of the substrate 120. The third yoke 133 may be disposed at a position corresponding to the third magnet 720. Attractive force may be generated between the third yoke 133 and the third magnet 720. The third ball 830 may be pressed by the attractive force between the third yoke 133 and the third magnet 720. The third ball 830 may be pressed between the third holder 410 and the second holder 310 by the attractive force between the third yoke 133 and the third magnet 720.

The lens driving device 10 may comprise the cover 140. The fixed unit 100 may comprise the cover 140. The cover 140 may be disposed on the base 110. The cover 140 may be coupled to the base 110. The cover 140 may be fixed to the base 110. The cover 140 may accommodate the first holder 210 therein. The cover 140 may accommodate the second holder 310 therein. The cover 140 may accommodate the third holder 410 therein. The cover 140 may be a shield member. The cover 140 may be a shield may.

The cover 140 may comprise the upper plate 141. The upper plate 141 may be disposed on the movable unit. Upward movement of the movable unit may be limited by the movable unit that is in contact with the upper plate 141. The upper plate 141 may comprise a hole through which light passes.

The cover 140 may comprise the side plate 142. The side plate 142 may extend from the upper plate 141. The side plate 142 may be disposed on the base 110. The side plate 142 may be disposed on a stepped portion that protrudes from a lower end of the outer surface of the base 110. The side plate 142 may comprise a plurality of side plates. The side plate 142 may comprise four side plates. The side plate 142 may comprise a first side plate and a second side plate, which are disposed opposite each other, and a third side plate and a fourth side plate, which are disposed opposite each other.

The lens driving device 10 may comprise the movable unit. The movable unit may be disposed on the fixed unit 100. The movable unit may be disposed within the fixed unit 100. The movable unit may be disposed on the fixed unit 100. The movable unit may be movably disposed on the fixed unit 100. The movable unit may move relative to the fixed unit 100 by the driving unit. The movable unit may move during an AF operation. The movable unit may move during an OIS operation. A lens may be coupled to the movable unit.

The lens driving device 10 may comprise a first movable unit 200. The first movable unit 200 may be an 'AF movable unit'. The first movable unit 200 may be disposed on the fixed unit 100. The first movable unit 200 may be disposed within the fixed unit 100. The first movable unit 200 may be disposed on the fixed unit 100. The first movable unit 200 may be disposed between the fixed unit 100 and the second movable unit 300. The first movable unit 200 may be disposed between the fixed unit 100 and the third movable unit 400. The first movable unit 200 may be movably disposed on the fixed unit 100. The first movable unit 200 may move in the optical axis direction with respect to the fixed unit 100 by the first driving unit 500. The first movable unit 200 may move during the AF operation

The lens driving device 10 may comprise the first holder 210. The first movable unit 200 may comprise the first holder 210. The first holder 210 may be an 'AF holder'. The first holder 210 may be an 'AF carrier'. The first holder 210 may be disposed within the base 110. The first holder 210 may be disposed on the base 110. The first holder 210 may be disposed inside the cover 140. The first holder 210 may be disposed between the base 110 and the second holder 310. The first holder 210 may be disposed between the base 110 and the third holder 410. The first holder 210 may be disposed to be movable in the optical axis direction.

In the optical axis direction, the first holder 210 may not overlap both the second holder 310 and the third holder 410. The first holder 210 may overlap the second holder 310 and the third holder 410 in a direction perpendicular to the optical axis. As a modified example, a stopper may be disposed on the first holder 210. Here, the stopper of the first holder 210 may overlap at least one of the second holder 310 and the third holder 410 in the optical axis direction.

The first holder 210 may comprise a hole 211. The hole 211 may be a 'second holder avoidance hole'. The hole 211 may be defined in the side plate of the first holder 210. The hole 211 may pass through the first holder 210 in the direction perpendicular to the optical axis. The hole 211 may be defined as a groove that is recessed from a top surface of the first holder 210 or as a groove that is recessed from a bottom surface. A portion of the second holder 310 may be disposed in the hole 211. The second magnet 620 may be disposed in the hole 211.

The first holder 210 may comprise a first groove 212. The first groove 212 may be a 'first ball accommodation groove'. The first ball 810 may be disposed in the first groove 212. The first groove 212 may be in direct contact with the first ball 810. The first groove 212 may be disposed in the optical axis direction. The first groove 212 may comprise a plurality of grooves. The first groove 212 may comprise two grooves. The two grooves may be disposed parallel to each other. The first groove 212 may comprise a first groove that is in contact with the first ball 810 at two points, and a second groove that is in contact with the first ball 810 at one point. As a modified example, both the first groove and the second groove may be in contact with the first ball 810 at two points.

The first holder 210 may comprise a second groove 213. The second groove 213 may be a 'second ball accommodation groove'. The second ball 820 may be disposed in the second groove 213. The second groove 213 may be in direct contact with the second ball 820. The second groove 213 may be disposed in the direction perpendicular to the optical axis. The second groove 213 may comprise a plurality of grooves. The second groove 213 may comprise four grooves. The second groove 213 may comprise a first groove that is in contact with the second ball 820 at two points and a second groove that is in contact with the second ball 820 at one point. As a modified example, both the first groove and the second groove may be in contact with the second ball 820 at two points.

The first holder 210 may comprise a groove 214. The groove 214 may be a 'magnet accommodation groove'. The groove 214 may be defined in the outer surface of the first holder 210. The first magnet 520 may be disposed in the groove 214. The groove 214 may be defined in a shape corresponding to the first magnet 520.

The first holder 210 may comprise a groove 215. The groove 215 may be defined concavely in an inner surface of the first holder 210. The third holder 410 may be disposed in the groove 215. The first magnet 520 may be disposed at an opposite side of the groove 215.

The lens driving device 10 may comprise the second movable unit 300. The second movable unit 300 may be an 'OIS-x movable unit'. The second movable unit 300 may be disposed on the fixed unit 100. The second movable unit 300 may be disposed within the fixed unit 100. The second movable unit 300 may be disposed on the fixed unit 100. The second movable unit 300 may be disposed within the first movable unit 200. The second movable unit 300 may be disposed between the fixed unit 100 and the third movable unit 400. The second movable unit 300 may be disposed between the first movable unit 200 and the third movable unit 400. The second movable unit 300 may be disposed to be movable. The second movable unit 300 may move in the x-axis direction perpendicular to the optical axis with respect to the fixed unit 100 and the first movable unit 200 by the second driving unit 600. The second movable unit 300 may move during the OIS operation.

The lens driving device 10 may comprise the second holder 310. The second movable unit 300 may comprise the second holder 310. The second holder 310 may be an 'OIS-x holder'. The second holder 310 may be an 'OIS-x carrier'. The second holder 310 may be disposed within the first holder 210. The second holder 310 may be disposed within the base 110. The second holder 310 may be disposed on the base 110. The second holder 310 may be disposed inside the cover 140. The second holder 310 may be disposed between the base 110 and the third holder 410. The second holder 310 may be disposed between the first holder 210 and the third holder 410. The second holder 310 may be disposed to be movable in the x-axis direction perpendicular to the optical axis. The second holder 310 may comprise a portion disposed between the first holder 210 and the third holder 410 in the second direction.

The second holder 310 may comprise a hole 311. The hole 311 may be a 'third holder avoidance hole'. The hole 311 may be defined in a side plate of the second holder 310. The hole 311 may pass through the second holder 310 in the direction perpendicular to the optical axis. The hole 311 may be defined as a groove that is recessed from a top surface of the first holder 310 or as a groove that is recessed from a bottom surface. A portion of the third holder 410 may be disposed in the hole 311. The third magnet 720 may be disposed in the hole 311.

The second holder 310 may comprise a first groove 312. The first groove 312 may be a 'second ball accommodation groove'. The second ball 820 may be disposed in the first groove 312. The first groove 312 may be in direct contact with the second ball 820. The first groove 312 may be disposed in the direction perpendicular to the optical axis. The first groove 312 may comprise a plurality of grooves. The first groove 312 may comprise four grooves. The first groove 312 may comprise a first groove that is in contact with the second ball 820 at two points and a second groove that is in contact with the second ball 820 at one point. As a modified example, both the first groove and the second groove may be in contact with the second ball 820 at two points.

The second holder 310 may comprise a second groove 313. The second groove 313 may be a 'third ball accommodation groove'. The third ball 830 may be disposed in the second groove 313. The second groove 313 may be in direct contact with the third ball 830. The second groove 313 may be disposed in the direction perpendicular to the optical axis. The second groove 313 may comprise a plurality of grooves. The second groove 313 may comprise four grooves. The second groove 313 may comprise a first groove that is in contact with the third ball 830 at two points and a second groove that in contact with the third ball 830 at one point. As a modified example, both the first groove and the second groove may be in contact with the third ball 830 at two points.

The second holder 310 may comprise a groove 314. The groove 314 may be a 'magnet accommodation groove'. The groove 314 may be defined in an outer surface of the second holder 310. The second magnet 620 may be disposed in the groove 314. The groove 314 may be defined in a shape corresponding to the second magnet 620.

The lens driving device 10 may comprise a third movable unit 400. The third movable unit 400 may be an 'OIS-y movable unit'. The third movable unit 400 may be disposed on the fixed unit 100. The third movable unit 400 may be disposed within the fixed unit 100. The third movable unit 400 may be disposed on the fixed unit 100. The third movable unit 400 may be disposed within the first movable unit 200. The third movable unit 400 may be disposed within the second movable unit 300. The third movable unit 400 may be disposed to be movable. The third movable unit 400 may move in the y-axis direction perpendicular to both the optical axis and the x-axis with respect to the fixed unit 100, the first movable unit 200, and the second movable unit 300 by the third driving unit 700. The third movable unit 400 may move during the OIS operation.

The lens driving device 10 may comprise a third holder 410. The third movable unit 400 may comprise the third holder 410. The third holder 410 may be a 'bobbin'. The third holder 410 may be an 'OIS-y holder'. The third holder 410 may be an 'OIS-y carrier'. The third holder 410 may be disposed within the second holder 310. The third holder 410 may be disposed within the first holder 210. The third holder 410 may be disposed within the base 110. The third holder 410 may be disposed on the base 110. The third holder 410 may be disposed inside the cover 140. The third holder 410 may be disposed to be movable in the y-axis direction perpendicular to both the optical axis and the x-axis.

The third holder 410 may comprise a groove 411. The groove 411 may be a 'third ball accommodation groove'. The third ball 830 may be disposed in the groove 411. The groove 411 may be in direct contact with the third ball 830. The groove 411 may be defined in the direction perpendicular to the optical axis. The groove 411 may comprise a plurality of grooves. The groove 411 may comprise four grooves. The groove 411 may comprise a first groove that is in contact with the third ball 830 at two points, and a second groove that is in contact with the third ball 830 at one point. As a modified example, both the first groove and the second groove may be in contact with the third ball 830 at two points.

The third holder 410 may comprise a groove 414. The groove 414 may be a 'magnet accommodation groove'. The groove 414 may be defined in an outer surface of the third holder 410. The third magnet 720 may be disposed in the groove 414. The groove 414 may be defined in a shape corresponding to the third magnet 720.

The lens driving device 10 may comprise a driving unit. The driving unit may move the movable unit relative to the fixed unit. The driving unit may comprise an AF driving unit. The driving unit may comprise an OIS driving unit. The driving unit may comprise a coil and a magnet.

The lens driving device 10 may comprise the first driving unit 500. The first driving unit 500 may be an 'AF driving unit'. The first driving unit 500 may move the first holder 210 in the optical axis direction. The first driving unit 500 may move the first holder 210 in the optical axis direction through electromagnetic force. The first driving unit 500 may comprise a coil and a magnet.

The lens driving device 10 may comprise a first coil 510. The first driving unit 500 may comprise the first coil 510. The first coil 510 may be an 'AF coil'. The first coil 510 may interact with the first magnet 520. The first coil 510 may move the first magnet 520 in the optical axis direction. The first coil 510 may move the first magnet 520 in the optical axis direction through the interaction with the first magnet 520. The first coil 510 may face the first magnet 520. The first coil 510 may face the first magnet 520. The first coil 510 may be disposed at a position corresponding to the first magnet 520. The first coil 510 may overlap the first magnet 520 in the direction perpendicular to the optical axis. The first coil 510 may be disposed on the substrate 120. The first coil 510 may be disposed on the base 110. The first coil 510 may be disposed on the fixed unit 100.

The lens driving device 10 may comprise the first magnet 520. The first driving unit 500 may comprise the first magnet 520. The first magnet 520 may be an 'AF magnet'. The first magnet 520 may be disposed on the first holder 210. The first magnet 520 may be disposed on an outer surface of the first holder 210. The first magnet 520 may be fixed to the first holder 210. The first magnet 520 may be coupled to the first holder 210. The first magnet 520 may be bonded to the first holder 210 with an adhesive. The first magnet 520 may be disposed inside the cover 140. The first magnet 520 may interact with the first coil 510. The first magnet 520 may electromagnetically interact with the first coil 510. The first magnet 520 may be disposed at a position corresponding to the first coil 510. The first magnet 520 may face the first coil 510. The first magnet 520 may be opposite to the first coil 510. The first magnet 520 may overlap the first coil 510 in the direction perpendicular to the optical axis.

The first magnet 520 may be a four-pole magnet. The first magnet 520 may comprise a four-pole magnetization magnet. The first magnet 520 may comprise a first magnet part comprising a N pole and a S pole, and a second magnet part comprising a N pole and a S pole. The first magnet part and the second magnet part may be disposed vertically. The first magnet part and the second magnet part may be spaced apart from each other in the vertical direction, and a neutral part may be disposed between the first magnet part and the second magnet part.

The lens driving device 10 may comprise a driver IC 530. The first driving unit 500 may comprise the driver IC 530. The driver IC 530 may be an 'AF driver IC'. The driver IC 530 may be disposed on the substrate 120. The driver IC 530 may comprise a sensing part that detects the first magnet 520. The sensing part may comprise a Hall element (Hall IC). The sensing part may comprise a Hall sensor. The driver IC 530 may be electrically connected to the first coil 510. The driver IC 530 may supply current to the first coil 510. The driver IC 530 may detect movement of the first magnet 520. A movement amount or position of the first magnet 520 detected by the driver IC 530 may be used for feedback of auto focus driving.

The driver IC 530 may be disposed within the first coil 510. The driver IC 530 may overlap the neutral part of the first magnet 520 in the direction perpendicular to the optical axis. As a modified example, the driver IC 530 may be disposed on the outside of the first coil 510.

As a modified example, the lens driving device 10 may comprise a Hall sensor. That is, the lens driving device 10 may comprise the Hall sensor instead of the driver IC 530.

The lens driving device 10 may comprise the second driving unit 600. The second driving unit 600 may be an 'OIS-x driving unit'. The second driving unit 600 may move the second holder 310 in the first direction perpendicular to the optical axis. The second driving unit 600 may move the second holder 310 in a first direction perpendicular to the optical axis through electromagnetic force. The second driving unit 600 may comprise a coil and a magnet.

The lens driving device 10 may comprise the second coil 610. The second driving unit 600 may comprise the second coil 610. The second coil 610 may be an 'OIS-x coil'. The second coil 610 may interact with the second magnet 620. The second coil 610 may move the second magnet 620 in the x-axis direction perpendicular to the optical axis. The second coil 610 may move the second magnet 620 in the x-axis direction through the interaction with the second magnet 620. The second coil 610 may face the second magnet 620. The second coil 610 may be opposite to the second magnet 620. The second coil 610 may be disposed at a position corresponding to the second magnet 620. The second coil 610 may overlap the second magnet 620 in the direction perpendicular to the optical axis. The second coil 610 may be disposed on the substrate 120. The second coil 610 may be disposed on the base 110. The second coil 610 may be disposed on the fixed unit 100.

The lens driving device 10 may comprise the second magnet 620. The second driving unit 600 may comprise the second magnet 620. The second magnet 620 may be an 'OIS-x magnet'. The second magnet 620 may be disposed on the second holder 310. The second magnet 620 may be disposed on an outer surface of the second holder 310. The second magnet 620 may be fixed to the second holder 310. The second magnet 620 may be coupled to the second holder 310. The second magnet 620 may be bonded to the second holder 310 with an adhesive. The second magnet 620 may be disposed inside the cover 140. The second magnet 620 may interact with the second coil 610. The second magnet 620 may electromagnetically interact with the second coil 610. The second magnet 620 may be disposed at a position corresponding to the second coil 610. The second magnet 620 may face the second coil 610. The second magnet 620 may be opposite to the second coil 610. The second magnet 620 may overlap the second coil 610 in the direction perpendicular to the optical axis.

The second magnet 620 may be disposed in the hole 211 of the first holder 210. The second magnet 620 may overlap the first holder 210 in the first direction. The second magnet 620 may overlap the first holder 210 in the optical axis direction.

The second magnet 610 may be a four-pole magnet. The second magnet 620 may comprise a four-pole magnetization magnet. The second magnet 620 may comprise a first magnet part comprising a N pole and a S pole, and a second magnet part comprising a N pole and a S pole. The first magnet part and the second magnet part may be disposed horizontally. The first magnet part and the second magnet part may be spaced apart from each other in the horizontal direction, and a neutral part may be disposed between the first magnet part and the second magnet part.

In this embodiment, even when the second magnet 620 moves due to the interaction between the second coil 610 and the second magnet 620, a distance between the second coil 610 and the second magnet 620 may be maintained constantly.

The lens driving device 10 may comprise the sensor 630. The second driving unit 600 may comprise the sensor 630. The sensor 630 may be an 'OIS-x sensor'. The sensor 630 may be disposed on the substrate 120. The sensor 630 may comprise a Hall sensor. The sensor 630 may detect the second magnet 620. The sensor 630 may detect magnetic force of the second magnet 620. The sensor 630 may be disposed within the second coil 610. The sensor 630 may overlap the second coil 610 in the optical axis direction. The sensor 630 may face the second magnet 620. The sensor 630 may be disposed at a position corresponding to the second magnet 620. The sensor 630 may detect movement of the second magnet 620. An amount of movement or position of the second magnet 620 detected by the sensor 630 may be used for feedback of the optical image stabilization driving in the x-axis direction.

The lens driving device 10 may comprise the third driving unit 700. The third driving unit 700 may be an 'OIS-y driving unit'. The third driving unit 700 may move the third holder 410 in a second direction that is perpendicular to both the optical axis and the first direction. The third driving unit 700 may move the third holder 410 in the second direction perpendicular to both the optical axis and the first direction through electromagnetic force. The third driving unit 700 may comprise a coil and a magnet.

The lens driving device 10 may comprise the third coil 710. The third driving unit 700 may comprise the third coil 710. The third coil 710 may be an 'OIS-y coil'. The third coil 710 may interact with the third magnet 720. The third coil 710 may be disposed at an opposite side of the first coil 510 with respect to the optical axis.

The third coil 710 may move the third magnet 720 in the y-axis direction perpendicular to both the optical axis and the x-axis. The third coil 710 may move the third magnet 720 in the y-axis direction through interaction with the third magnet 720. The third coil 710 may face the third magnet 720. The third coil 710 may be opposite to the third magnet 720. The third coil 710 may be disposed at a position corresponding to the third magnet 720. The third coil 710 may overlap the third magnet 720 in the direction perpendicular to the optical axis. The third coil 710 may be disposed on the substrate 120. The third coil 710 may be disposed on the base 110. The third coil 710 may be disposed on the fixed unit 100.

The lens driving device 10 may comprise the third magnet 720. The third driving unit 700 may comprise the third magnet 720. The third magnet 720 may be an 'OIS-y magnet'. The third magnet 720 may be disposed on the third holder 410. The third magnet 720 may be disposed on an outer surface of the third holder 410. The third magnet 720 may be fixed to the third holder 410. The third magnet 720 may be coupled to the third holder 410. The third magnet 720 may be bonded to the third holder 410 with an adhesive. The third magnet 720 may be disposed inside the cover 140. The third magnet 720 may interact with the third coil 710. The third magnet 720 may electromagnetically interact with the third coil 710. The third magnet 720 may be disposed at a position corresponding to the third coil 710. The third magnet 720 may face the third coil 710. The third magnet 720 may be opposite to the third coil 710. The third magnet 720 may overlap the third coil 710 in the direction perpendicular to the optical axis.

The third magnet 720 may be disposed in the hole 311 of the second holder 310. The third magnet 720 may overlap the second holder 310 in the second direction. The third magnet 720 may overlap the second holder 310 in the optical axis direction.

The third magnet 720 may be a four-pole magnet. The third magnet 720 may comprise a four-pole magnetization magnet. The third magnet 720 may comprise a first magnet part comprising a N pole and a S pole, and a second magnet part comprising a N pole and a S pole. The first magnet part and the second magnet part may be disposed horizontally. The first magnet part and the second magnet part may be spaced apart from each other in the horizontal direction, and a neutral part may be disposed between the first magnet part and the second magnet part.

In this embodiment, even when the third magnet 720 moves due to the interaction between the third coil 710 and the third magnet 720, a distance between the third coil 710 and the third magnet 720 may be maintained constantly.

The lens driving device 10 may comprise the sensor 730. The third driving unit 700 may comprise the sensor 730. The sensor 730 may be an 'OIS-y sensor'. The sensor 730 may be disposed on the substrate 120. The sensor 730 may comprise a Hall sensor. The sensor 730 may detect the third magnet 720. The sensor 730 may detect magnetic force of the third magnet 720. The sensor 730 may be disposed within the third coil 710. The sensor 730 may overlap with the third coil 710 in the optical axis direction. The sensor 730 may face the third magnet 720. The sensor 730 may be disposed at a position corresponding to the third magnet 720. The sensor 730 may detect movement of the third magnet 720. An amount of movement or position of the third magnet 720 detected by the sensor 730 may be used for feedback of the optical image stabilization driving in the y-axis direction.

The lens driving device 10 may comprise a guide member. The guide member may comprise a ball. The guide member may comprise a pin. The guide member may comprise a cylindrical member. The guide member may guide the movement of the movable unit relative to the fixed unit 100 in a specific direction.

The lens driving device 10 may comprise the first ball 810. The first ball 810 may be an 'AF guide ball'. The first ball 810 may guide the movement of the first holder 210 relative to the base 110 in the optical axis direction. The first ball 810 may be disposed between the base 110 and the first holder 210. The first ball 810 may be disposed between the base 110 and the first holder 210 in the first direction. The first ball 810 may be disposed in the groove 113 of the base 110. The first ball 810 may be disposed in the first groove 212 of the first holder 210. The first ball 810 may comprise a first-1 ball that is in contact with the base 110 and the first holder 210 at four points, and a first-2 ball that is in contact with the base 110 and the first holder 210 at three points. The first ball 810 may be a spherical shape. The first ball 810 may be made of a metal. Grease may be applied to a surface of the first ball 810.

The first ball 810 may comprise a plurality of balls. The first ball 810 may comprise six balls. Three first balls 810 may be disposed at one side of the first magnet 520, and the remaining three first balls 810 may be disposed at the other side of the first magnet 520.

The lens driving device 10 may comprise the second ball 820. The second ball 820 may be an 'OIS-x guide ball'. The second ball 820 may guide the movement of the second holder 310 relative to the first holder 210 in the x-axis direction. The second ball 820 may be disposed between the first holder 210 and the second holder 310. The second ball 820 may be disposed between the first holder 210 and the second holder 310 in the second direction. An entire area from a lower end to an upper end of the second ball 820 may overlap both the first holder 210 and the second holder 310 in the second direction. An entire area of the second ball 820 may overlap the first holder 210 and the second holder 310 in the second direction. The second ball 820 may be disposed between an inner surface of the first holder 210 and an outer surface of the second holder 310. When viewed from the outside of the second holder 310, the second ball 820 may overlap the second magnet 620 in the horizontal direction.

The second ball 820 may be disposed in the second groove 213 of the first holder 210. The second ball 820 may be disposed in the first groove 312 of the second holder 310. The second ball 820 may comprise a first-1t ball that is in contact with the first holder 210 and the second holder 310 at four points, and a first-2 ball that is in contact with the first holder 210 and the second holder 310 at three points. The second ball 820 may have a spherical shape. The second ball 820 may be made of a metal. Grease may be applied to a surface of the second ball 820.

The second ball 820 may comprise a plurality of balls. The second ball 820 may comprise four balls. Two second balls 820 may be disposed at one side of the second magnet 620, and the remaining two second balls 820 may be disposed at the other side of the second magnet 620.

The lens driving device 10 may comprise the third ball 830. The third ball 830 may be an 'OIS-y guide ball'. The third ball 830 may guide the movement of the third holder 410 relative to the second holder 310 in the y-axis direction. The third ball 830 may be disposed between the second holder 310 and the third holder 410. The third ball 830 may be disposed between the second holder 310 and the third holder 410 in the first direction. An entire area from a lower end to an upper end of the third ball 830 may overlap both the second holder 310 and the third holder 410 in the first direction. The third ball 830 may be disposed between an inner surface of the second holder 310 and an outer surface of the third holder 410. When viewed from the outside of the third holder 410, the third ball 830 may overlap the third magnet 720 in the horizontal direction. Here, the horizontal direction may be any direction perpendicular to the optical axis. When viewed from a top surface, at least a portion of the third ball 830 may overlap the third magnet 720 in the second direction.

A portion of the third ball 830 may overlap the second holder 310 in the first direction. Another portion of the third ball 830 may overlap the third holder 410 in the first direction. A portion of the third ball 830 may overlap the second holder 310 toward an upper side in the first direction. Another portion of the third ball 830 may overlap the third holder 410 toward an upper side in the first direction. A portion of the third ball 830 may overlap the second holder 310 toward a lower side in the first direction. Another portion of the third ball 830 may overlap the third holder 410 toward the lower side in the first direction.

The third ball 830 may be disposed in the second groove 313 of the second holder 310. The third ball 830 may be disposed in the groove 411 of the third holder 410. The third ball 830 may comprise a first-1 ball that is in contact with the second holder 310 and the third holder 410 at four points, and a first-2 ball that is in contact with the second holder 310 and the third holder 410 at three points. The third ball 830 may be a spherical shape. The third ball 830 may be made of a metal. Grease may be applied to a surface of the third ball 830.

The third ball 830 may comprise a plurality of balls. The third ball 830 may comprise four balls. Two third balls 830 may be disposed at one side of the third magnet 630, and the remaining two third balls 830 may be disposed at the other side of the third magnet 630.

Hereinafter, the auto focus (AF) driving of the lens driving device according to this embodiment is described with reference to the drawings.

FIGS. 18 to 20 are views for explaining the auto focus driving of the lens driving device according to this embodiment. FIG 18 is a cross-sectional view illustrating a configuration of the movable unit in an initial state in which current is not applied to a first coil. FIG 19 is a cross-sectional view illustrating a state in which forward current is applied to the first coil so that the movable unit moves upward in the optical axis direction. FIG 20 is a cross-sectional view illustrating a state in which reverse current is applied to the first coil so that the moving part moves downward in the optical axis direction.

The movable unit may be disposed at a position spaced apart from both the upper plate 141 of the cover 140 and the base 110 in an initial position at which no current is applied to the first coil 510. Here, the movable unit may be the first movable unit 200. In addition, the movable unit may comprise first to third movable units 200, 300, and 400.

When forward current is applied to the first coil 510, the first magnet 520 may move upward in the optical axis direction due to the electromagnetic interaction between the first coil 510 and the first magnet 520 (see reference symbol A of FIG 19). Here, the first holder 210 may move upward in the optical axis direction together with the first magnet 520. Furthermore, the second holder 310, the third holder 410, and the lens together with the first holder 210 may move upward in the optical axis direction. Thus, a distance between the lens and the image sensor may be changed, so that a focus of an image formed on the image sensor through the lens may be adjusted.

When reverse current is applied to the first coil 510, the first magnet 520 may move downward in the optical axis direction due to the electromagnetic interaction between the first coil 510 and the first magnet 520 (see reference symbol B of FIG 20). Here, the first holder 210 may move downward in the optical axis direction together with the first magnet 520. Furthermore, the second holder 310, the third holder 410, and the lens together with the first holder 210 may move downward in the optical axis direction. Thus, a distance between the lens and the image sensor may be changed, so that a focus of an image formed on the image sensor through the lens may be adjusted.

During the movement process of the first magnet 520, the sensing part of the driver IC 530 may detect the amount of movement or position of the first magnet 520 by detecting strength of magnetic fields of the first magnet 520. The movement amount or position of the first magnet 520 detected by the driver IC 530 may be used for an auto focus feedback control.

Hereinafter, an optical image stabilization (OIS) operation of the lens driving device according to this embodiment is described with reference to the drawings.

FIGS. 21 to 23 are views for explaining the optical image stabilization driving of the lens driving device according to this embodiment. FIG 21 is a cross-sectional view illustrating a configuration of the movable unit in the initial state in which current is not applied to the second coil and the third coil. FIG 22 is a cross-sectional view illustrating a state in which current is applied to the second coil so that the second movable unit and the third movable unit move in the x-axis direction perpendicular to the optical axis. FIG 23 is a cross-sectional view illustrating a state in which current is applied to the third coil so that the third movable unit moves in the y-axis direction perpendicular to both the optical axis and the x-axis.

As illustrated in FIG 21, the movable unit may be disposed at an initial position at which no current is applied to the second coil 610 and the third coil 710. Here, the movable unit may be the second movable unit 300 and the third movable unit 400. In addition, the movable unit may comprise first to third movable units 200, 300, and 400.

When current is applied to the second coil 610, the second magnet 620 may move in the x-axis direction perpendicular to the optical axis due to the electromagnetic interaction between the second coil 610 and the second magnet 620 (see reference symbol A of FIG 22). Here, the second holder 310 may move in the x-axis direction together with the second magnet 620. Furthermore, the third holder 410 and the lens together with the second holder 310 may move in the x-axis direction. In more detail, when the forward current is applied to the second coil 610, the second magnet 620, the second holder 310, the third holder 410, and the lens may move in one direction along the x-axis. In addition, when the reverse current is applied to the second coil 610, the second magnet 620, the second holder 310, the third holder 410, and the lens may move in the other direction along the x-axis.

When current is applied to the third coil 710, the third magnet 720 may move in the y-axis direction perpendicular to the optical axis due to the electromagnetic interaction between the third coil 710 and the third magnet 720 (see reference symbol B of FIG 23). Here, the third holder 410 may move in the y-axis direction together with the third magnet 720. Furthermore, the lens may move in the y-axis direction together with the third holder 410. In more detail, when the forward current is applied to the third coil 710, the third magnet 720, the third holder 410, and the lens may move in one direction along the y-axis. In addition, when the reverse current is applied to the third coil 710, the third magnet 720, the third holder 410, and the lens may move in the other direction along the y-axis.

The sensor 630 may detect an amount of movement or position of the second magnet 620 by detecting strength of magnetic fields of the second magnet 620. The movement amount or position of the second magnet 620 detected by the sensor 630 may be used for an optical image stabilization feedback control in the x-axis direction. The sensor 730 may detect an amount of movement or position of the third magnet 720 by detecting strength of magnetic fields of the third magnet 720. The movement amount or position of the third magnet 720 detected by the sensor 730 may be used for an optical image stabilization feedback control in the y-axis direction.

Hereinafter, a camera device according to this embodiment is described with reference to the drawings.

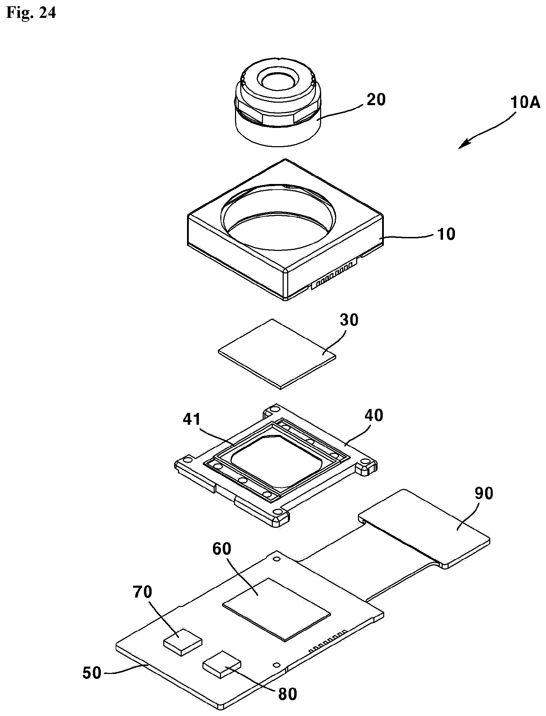

FIG 24 is an exploded perspective view of the camera device according to this embodiment.

A camera device 10A may comprise a camera module.

The camera device 10A may comprise a lens module 20. The lens module 20 may comprise at least one lens. The lens may be disposed at a position corresponding to the image sensor 60. The lens module 20 may comprise a lens and a barrel. The lens module 20 may be coupled to the holder 210 of the lens driving device 10. The lens module 20 may be attached to the holder 210 by screw coupling and/or an adhesive. The lens module 20 may move to be integrated with the holder 210.

The camera device 10A may comprise a filter 30. The filter 30 may serve to block light having a specific frequency band from passing through the lens module 20 from being incident into the image sensor 60. The filter 30 may be disposed parallel to a x-y plane. The filter 30 may be disposed between the lens module 20 and the image sensor 60. The filter 30 may be disposed on a sensor base 40. As a modified example, the filter 30 may be disposed on the base 110. The filter 30 may comprise an infrared filter. The infrared filter may block light in an infrared region from being incident into the image sensor 60.

The camera device 10A may comprise the sensor base 40. The sensor base 40 may be disposed between the lens driving device 10 and the printed circuit board 50. The sensor base 40 may comprise a protrusion 41 on which the filter 30 is disposed. An opening may be defined in a portion of the sensor base 40 on which the filter 30 is disposed so that light passing through the filter 30 is incident into the image sensor 60. An adhesive member may bond or adhere the base 310 of the lens driving device 10 to the sensor base 40. The adhesive member may additionally serve to prevent foreign substances from being introduced into the lens driving device 10. The adhesive material may comprise one or more of epoxy, a thermosetting adhesive, and a UV-curable adhesive.

The camera device 10A may comprise a printed circuit board (PCB) 50. The printed circuit board 50 may be a substrate or a circuit board. The lens driving device 10 may be disposed on the printed circuit board 50. The sensor base 40 may be disposed between the printed circuit board 50 and the lens driving device 10. The printed circuit board 50 may be electrically connected to the lens driving device 10. The image sensor 60 may be disposed on the printed circuit board 50. The printed circuit board 50 may be provided with various circuits, components, control units, etc. to convert an image formed on the image sensor 60 into an electrical signal and transmit the electrical signal to an external device.

The camera device 10A may comprise the image sensor 60. The image sensor 60 may be configured to form an image by the incident light passing through the lens and the filter 30. The image sensor 60 may be mounted on the printed circuit board 50. The image sensor 60 may be electrically connected to the printed circuit board 50. For example, the image sensor 60 may be coupled to the printed circuit board 50 using a surface mounting technology (SMT). As another example, the image sensor 60 may be coupled to the printed circuit board 50 by a flip chip technology. The image sensor 60 may be disposed so that the optical axis is aligned with the lens. That is, the optical axis of the image sensor 60 and the optical axis of the lens may be aligned with each other. The image sensor 60 may convert light irradiated onto an effective image area of the image sensor 60 into an electrical signal. The image sensor 60 may be any one of a charge coupled device (CCD), a metal oxide semi-conductor (MOS), a CPD, and a CID.

The camera device 10A may comprise a motion sensor 70. The motion sensor 70 may be mounted on the printed circuit board 50. The motion sensor 70 may be electrically connected to a control unit 80 through a circuit pattern provided on the printed circuit board 50. The motion sensor 70 may output rotational angular velocity information due to the movement of the camera device 10A. The motion sensor 70 may comprise a two-axis or three-axis gyro sensor or an angular velocity sensor.

The camera device 10A may comprise the control unit 80. The control unit 80 may be disposed on the printed circuit board 50. The control unit 80 may be electrically connected to the coil 330 of the lens driving device 10. The control unit 80 may individually control a direction, intensity, and amplitude of current supplied to the coil 330. The control unit 80 may control the lens driving device 10 to perform the auto focus function and/or the optical image stabilization function. Furthermore, the control unit 80 may perform the auto focus feedback control and/or the optical image stabilization feedback control for the lens driving device 10.

The camera device 10A may comprise a connector 90. The connector 90 may be electrically connected to the printed circuit board 50. The connector 90 may comprise a port for electrical connection with an external device.

Hereinafter, an optical instrument according to this embodiment is described with reference to the drawings.

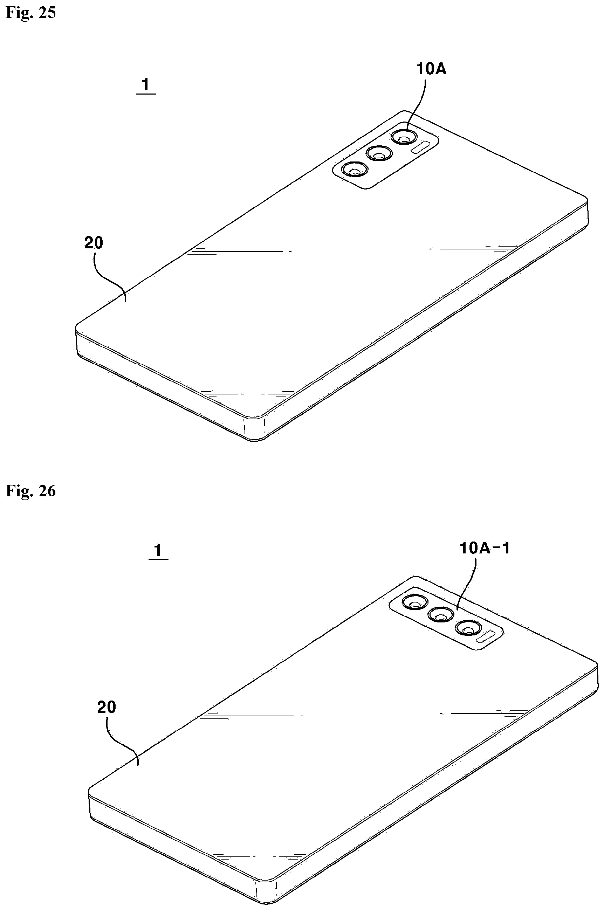

FIG 25 is a perspective view of an optical instrument according to this embodiment, and FIG 26 is a perspective view illustrating a modified example of an optical instrument.

An optical instrument 1 may comprise one or more of a mobile phone, a cellular phone, a portable terminal, a mobile terminal, a smart phone, a smart pad, a portable smart device, a digital camera, a laptop computer, a digital broadcasting terminal, a personal digital assistants (PDA), a portable multimedia player (PMP), and a navigation device. The optical instrument 1 may comprise any device for taking images or photographs.

The optical instrument 1 may comprise a main body 20. The optical instrument 1 may comprise a camera device 10A. The camera device 10A may be disposed on the main body 20. The camera device 10A may photograph a subject. The optical instrument 1 may comprise a display. The display may be disposed on the main body 20. The display may output one or more of images and videos captured by the camera device 10A. The display may be disposed on a first surface of the main body 20. The camera device 10A may be disposed on one or more of a first surface of the main body 20 and a second surface opposite to the first surface. As illustrated in FIG 22, the camera device 10A may be provided with a triple camera disposed in a vertical direction. As illustrated in FIG 23, the camera device 10A-1 may have a triple camera disposed in a horizontal direction.

Although the embodiment of the inventive concept is described with reference to the accompanying drawings, those with ordinary skill in the technical field of the inventive concept pertains will be understood that the present disclosure may be carried out in other specific forms without changing the technical idea or essential features. Therefore, the above-disclosed embodiments are to be considered illustrative and not restrictive.

## Claims

1. A lens driving device comprising:
a base;
a first holder disposed in the base;
a second holder disposed in the first holder;
a bobbin disposed in the second holder;
a first driving unit configured to move the first holder in a z-axis direction along an optical axis;
a second driving unit configured to move the second holder in a y-axis direction perpendicular to the z-axis direction; and
a third driving unit configured to move the bobbin in an x-axis direction perpendicular to the z-axis direction and the y-axis direction,
wherein each of the first to third driving units comprises a coil and a magnet,
wherein the first driving unit comprises a coil coupled with one of the base and the first holder and a magnet coupled with the other of the base and the first holder,
wherein the second driving unit comprises a coil coupled with one of the base and the second holder and a magnet coupled with the other of the base and the second holder, and
wherein the third driving unit comprises a coil coupled with one of the base and the bobbin and a magnet coupled with the other of the base and the bobbin.

2. The lens driving device of claim 1, wherein the first holder and the second holder are separated from each other.

3. The lens driving device of claim 1, wherein a first sidewall of the first holder and a first sidewall of the second holder are overlapped with each other in the x-axis direction and are disposed at one side of the bobbin.

4. The lens driving device of claim 1, comprising a first ball disposed between a second sidewall of the first holder and a second sidewall of the base.

5. The lens driving device of claim 1, comprising a second ball disposed between a first sidewall of the first holder and a first sidewall of the second holder.

6. The lens driving device of claim 1, comprising a third ball disposed between a second sidewall of the second holder and the bobbin.

7. The lens driving device of claim 6, wherein the third ball is disposed between the second holder and the bobbin in the x-axis direction.

8. The lens driving device of claim 5, wherein the second ball is disposed between the first holder and the second holder in the y-axis direction.

9. The lens driving device of claim 1, wherein the first holder comprises a hole, and
wherein the magnet of the second driving unit is disposed on the hole of the first holder to be overlapped with the first holder in the x-axis direction.

10. A lens driving device comprising:
a base;
a first holder disposed in the base;
a second holder disposed in the first holder;
a third holder disposed in the second holder;
a first driving unit configured to move the first holder in a direction along an optical axis;
a second driving unit configured to move the second holder in a first direction perpendicular to the optical axis;
a third driving unit configured to move the third holder in a second direction perpendicular to both the optical axis and the first direction;
a first ball disposed between the base and the first holder;
a second ball disposed between the first holder and the second holder; and
a third ball disposed between the second holder and the third holder,
wherein the third ball is disposed between the second holder and the third holder in the first direction.
